(19) Europäisches Patentamt
European Patent Office
Office européen des brevets

(11) **EP 2 551 836 B1**

(12) **FASCICULE DE BREVET EUROPEEN**

(45) Date de publication et mention
de la délivrance du brevet:
**14.09.2016 Bulletin 2016/37**

(51) Int Cl.:
*G08G 5/02* *(2006.01)*    *G05D 1/06* *(2006.01)*

(21) Numéro de dépôt: **12177428.5**

(22) Date de dépôt: **23.07.2012**

(54) **Procédé et dispositif de gestion optimisée de la trajectoire verticale d'un aéronef**

Verfahren und Vorrichtung zur optimierten Steuerung der vertikalen Flugbahn eines Luftfahrzeugs

Method and device for the optimised management of the vertical path of an aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.07.2011 FR 1156961**

(43) Date de publication de la demande:
**30.01.2013 Bulletin 2013/05**

(73) Titulaire: **Airbus Opérations SAS
31060 Toulouse (FR)**

(72) Inventeurs:
• **Constans, Florian
31820 Pibrac (FR)**
• **Lefebvre, Mickaël
31300 Toulouse (FR)**

(74) Mandataire: **Gevers & Orès
41 avenue de Friedland
75008 Paris (FR)**

(56) Documents cités:
**US-A1- 2008 249 674    US-A1- 2008 262 665
US-A1- 2008 269 966    US-A1- 2011 137 495**

## Description

La présente invention concerne un procédé et un dispositif de gestion optimisée de la trajectoire verticale d'un aéronef, lors d'un vol le long d'une trajectoire d'approche prédéterminée, de manière à assurer une approche finale stabilisée à partir d'une altitude de stabilisation de consigne.

On sait que, préalablement à l'atterrissage sur une piste, un avion doit suivre une trajectoire d'approche qui s'achève par une approche finale stabilisée. Sur cette trajectoire d'approche, l'avion décélère (poussée moteur au minimum) pour atteindre une vitesse d'approche de consigne à un point de stabilisation. Pendant l'approche, le pilote commande les différentes configurations aérodynamiques, ainsi que la sortie du train d'atterrissage. Le cas idéal est celui où l'avion arrive au point de stabilisation avec une vitesse sensiblement proche de la vitesse d'approche de consigne et en configuration d'atterrissage. Lors de cette approche finale stabilisée, l'avion en configuration d'atterrissage suit un axe d'approche finale (encore désigné « glide » en anglais) de pente par rapport au sol prédéfinie (généralement -3°), avec la vitesse d'approche de consigne, un réglage du régime des moteurs pour maintenir ladite vitesse d'approche et une assiette stabilisés à partir d'une altitude de stabilisation de consigne (associée audit point de stabilisation), par exemple égale à 1000 pieds (environ 300 mètres).

Cependant, il peut arriver que l'approche finale soit une approche non stabilisée, du fait d'une distance trop courte à la piste pour dissiper l'énergie empêchant ainsi de rejoindre l'altitude de stabilisation dans des conditions de vol stabilisées (cas de sur-énergie) ou du fait d'une perte rapide de l'énergie (cas de sous-énergie), ou bien encore d'évènements extérieurs à l'aéronef, amenant à des perturbations de l'approche.

On sait en outre qu'il existe, actuellement, différentes actions qui permettent de rétablir l'avion sur une approche stabilisée dans le cas où un état de sur-énergie ou un état de sous-énergie de celui-ci est détecté.

En particulier, en cas de non-détection d'un état de sous-énergie de l'avion, c'est-à-dire lorsque la finesse de l'avion est trop dégradée (configurations aérodynamiques établies trop tôt, vent de face, vitesse faible et avion loin de la piste, etc.), l'avion va suivre la trajectoire d'approche avec une diminution de sa vitesse telle que la vitesse d'approche de consigne sera atteinte bien avant le point de stabilisation (situé sur l'axe d'approche finale à l'altitude de stabilisation, par exemple à 3 milles nautiques du seuil de piste pour un axe d'approche finale de -3 degrés).

On entend par « finesse » de l'avion, l'efficacité aérodynamique de l'avion. Ainsi, la variation d'énergie totale de l'avion dépend de la finesse et de la poussée des moteurs de l'avion.

Dans cette situation, l'état de sous-énergie n'est détecté que tardivement et les pilotes utilisent les moteurs plus tôt (en comparaison du cas idéal) pour maintenir la vitesse d'approche de consigne jusqu'au point de stabilisation, puis jusqu'au seuil de piste.

Cependant, une détection tardive d'un état de sous-énergie entraîne une utilisation nécessaire des moteurs, ce qui provoque :

- une consommation de fuel supplémentaire ;
- une usure des moteurs ; et
- du bruit en cabine et au niveau du sol.

Lorsque l'état de sous-énergie est détecté suffisamment tôt à l'aide d'un dispositif de prédiction de l'état d'énergie de l'avion, les pilotes peuvent décider de maintenir la vitesse courante en utilisant les moteurs, par une augmentation du régime des moteurs. La finesse de l'avion ne sera alors plus autant dégradée. Une fois que les pilotes jugent nécessaire de repositionner les moteurs au régime de ralenti (« idle » en anglais), l'avion peut continuer sa décélération pour atteindre la vitesse d'approche au point de stabilisation.

Cependant, même dans ce dernier cas, une utilisation anticipée des moteurs entraîne :

- une consommation de fuel supplémentaire ;
- une usure moteur ; et
- du bruit en cabine et au niveau du sol (bien que ce dernier est atténué par rapport au cas précédent, puisque l'avion est plus haut).

Par ailleurs, en cas de détection d'un état de sur-énergie de l'avion, c'est-à-dire lorsque la finesse de l'avion n'est pas assez dégradée (configurations aérodynamiques pas encore établies, vent arrière, avion trop rapide et trop proche de la piste, etc.), l'avion va suivre la trajectoire d'approche avec une diminution de sa vitesse telle que la vitesse d'approche sera atteinte bien après le point de stabilisation.

Dans cette situation, l'état de sur-énergie n'est détectée que tardivement et les pilotes utilisent les aérofreins, afin d'accroître les capacités de diminution de la vitesse jusqu'au seuil de piste.

Cependant, une détection tardive de l'état de sur-énergie entraîne une utilisation nécessaire des aérofreins, ce qui provoque :

- le non respect dans certains cas de la procédure de stabilisation en approche;
- éventuellement, une annulation de l'approche, suivie d'une remise des gaz ;
- du bruit en cabine et au niveau du sol ; et
- de l'inconfort pour les passagers.

Lorsque l'état de sur-énergie est détecté suffisamment tôt à l'aide d'un dispositif de prédiction de l'état d'énergie de l'avion, les pilotes peuvent décider de sortir de manière anticipée :

- soit les aérofreins, pour dégrader davantage la finesse de l'avion. Une fois que les pilotes jugent nécessaire de rentrer les aérofreins, l'avion peut continuer sa décélération pour atteindre la vitesse d'approche de consigne au point de stabilisation ;

- soit les configurations becs et volets, pour dégrader davantage la finesse de l'avion. L'avion va ainsi décélérer davantage jusqu'à la vitesse d'approche de consigne au point de stabilisation ;

- soit le train d'atterrissage, pour dégrader davantage la finesse de l'avion. L'avion va ainsi décélérer davantage jusqu'à la vitesse d'approche de consigne au point de stabilisation.

[2]Cependant, une utilisation anticipée des aérofreins, des configurations becs et volets ou du train d'atterrissage provoque du bruit en cabine et au niveau du sol et, éventuellement, de l'inconfort pour les passagers.

En résumé, l'utilisation, des différents moyens précités (moteurs, aérofreins, configuration des becs et des volets, train d'atterrissage) pour rétablir une approche stabilisée peut engendrer :

- une consommation de fuel supplémentaire ;
- une usure des moteurs ;
- du bruit en cabine ;
- du bruit au niveau du sol ;
- de l'inconfort pour les passagers.

La présente invention a pour objet de remédier à ces inconvénients et, notamment, de guider l'avion pour qu'il réalise une approche stabilisée, c'est-à-dire pour que l'avion arrive à un point de la trajectoire d'approche, avec une vitesse d'approche, en configuration d'atterrissage et avec un régime moteur maintenant la vitesse d'approche.

La présente invention a également pour objet de rétablir une approche stabilisée en partant d'un état de sur-énergie ou sous-énergie détecté par une amélioration de la gestion de l'énergie de l'avion.

Le document US 2011/137495 A1 (SACLE JEROME [FR] ET AL) décrit une méthode pour calculer une nouvelle trajectoire verticale, si la trajectoire verticale de consigne ne peut être suivie en raison de restrictions d'espace aérien.

A cette fin, selon l'invention, le procédé de gestion optimisée de la trajectoire verticale d'un aéronef, lors d'un vol le long d'une trajectoire d'approche prédéterminée à laquelle est associée une trajectoire verticale théorique, de manière à assurer une approche finale stabilisée, définie par une vitesse d'approche de consigne et une altitude de stabilisation de consigne sur ladite trajectoire d'approche prédéterminée,

est remarquable en ce que, au cours du vol de l'aéronef le long de ladite trajectoire d'approche prédéterminée, on effectue, de façon automatique, les étapes successives suivantes :

A/ on détermine les valeurs courantes de paramètres de l'aéronef ;

B/ on prédit, par calcul, l'altitude de stabilisation à laquelle l'aéronef va atteindre ladite vitesse d'approche, en fonction des valeurs courantes déterminées d'au moins certains des paramètres de l'aéronef, de la trajectoire verticale théorique et de modèles prédéterminés ;

C/ on compare l'altitude de stabilisation prédite à l'altitude de stabilisation de consigne ;

D/ lorsque la différence entre l'altitude de stabilisation prédite et l'altitude de stabilisation de consigne est, en valeur absolue, supérieure à un seuil d'altitude prédéfini, on établit une trajectoire verticale optimisée en fonction des valeurs courantes déterminées d'au moins certains des paramètres de l'aéronef, des valeurs de paramètres auxiliaires comprenant un point d'interception de l'axe d'approche finale (Ax) et un point de cassure de la trajectoire verticale optimisée (TO) déterminée lors d'une itération précédente et de la différence entre l'altitude de stabilisation prédite et l'altitude de stabilisation de consigne déterminée lors de l'étape C/ ; et

E/ on transmet ladite trajectoire verticale optimisée à des moyens de guidage embarqués à bord de l'aéronef.

Ainsi, grâce à l'invention, on optimise la trajectoire verticale de l'avion que celui-ci sera amené à voler lors de la phase d'approche, afin de rétablir une approche stabilisée dans le cas d'une détection d'un état de sur-énergie (lorsque la différence entre l'altitude de stabilisation prédite et l'altitude de stabilisation de consigne est négative et, en valeur absolue, supérieure audit seuil d'altitude) ou d'un état de sous-énergie (lorsque la différence entre l'altitude de stabilisation prédite et l'altitude de stabilisation de consigne est positive et supérieure audit seuil d'altitude). Autrement dit, l'invention permet à l'avion d'arriver à un point de stabilisation (auquel est associée l'altitude de stabilisation) de la trajectoire d'approche, avec la vitesse d'approche de consigne, en configuration d'atterrissage et avec un régime moteur maintenant ladite vitesse d'approche de consigne.

De préférence, tant que la différence entre l'altitude de stabilisation prédite et l'altitude de stabilisation de consigne est, en valeur absolue, supérieure audit seuil d'altitude, on itère les étapes A/, B/, C/ et D/, la trajectoire verticale théorique étant remplacée, lors de l'étape B/, par la trajectoire optimisée établie lors de l'itération précédente.

Ainsi, on réalise un processus itératif qui permet un ajustement de la trajectoire verticale lors de la phase d'approche, par optimisations successives, de manière à réaliser un vol stabilisé en approche.

En particulier, lors de l'étape D/, on utilise, avantageusement, les valeurs courantes des paramètres auxiliaires suivants :

- un point d'interception de l'axe d'approche finale ;
- un point de cassure de la trajectoire verticale optimisée déterminée lors de l'itération précédente de l'étape D/.

En outre, la trajectoire verticale optimisée est, de façon avantageuse, comprise entre les deux trajectoires verticales extrêmes suivantes :

- une trajectoire verticale optimisée minimale qui, de préférence, comporte :

  ▪ un segment en pente, qui s'étend depuis le point courant de l'avion sur la trajectoire d'approche jusqu'à une altitude minimale d'interception de l'axe d'approche finale associé à la trajectoire d'approche ;
  ▪ un segment en palier, qui s'étend le long de ladite altitude minimale d'interception jusqu'à un point d'interception minimale ; et
  ▪ un segment en pente sur l'axe d'approche finale, qui s'étend depuis le point d'interception minimale jusqu'à un point de stabilisation,

- une trajectoire verticale optimisée maximale qui, de préférence, comporte :

  ▪ un segment en palier, qui s'étend depuis le point courant de l'avion, à l'altitude constante, jusqu'à un point d'interception de l'axe d'approche finale ; et
  ▪ un segment en pente sur l'axe d'approche finale, qui s'étend depuis ledit point d'interception jusqu'au point de stabilisation.

En outre, lorsque la trajectoire verticale optimisée, établie lors de la dernière itération de l'étape D/, appartient à une desdites trajectoires extrêmes, la trajectoire verticale optimisée transmise aux moyens de guidage, lors de l'étape E/, est la trajectoire verticale optimisée pour laquelle l'écart entre l'altitude de stabilisation prédite associée et l'altitude de stabilisation de consigne est minimisé.

Par ailleurs, de façon avantageuse :

- lorsque la différence entre l'altitude de stabilisation prédite et l'altitude de stabilisation de consigne est négative et, en valeur absolue, supérieure audit seuil d'altitude, l'avion est dans un état de sur-énergie et la trajectoire verticale optimisée, établie lors de l'étape D/, tend vers la trajectoire verticale optimisée maximale ;
- lorsque la différence entre l'altitude de stabilisation prédite et l'altitude de stabilisation de consigne est positive et supérieure audit seuil d'altitude, l'avion est dans un état de sous-énergie et la trajectoire verticale optimisée, établie lors de l'étape D/, tend vers la trajectoire verticale optimisée minimale.

Lors de l'étape A/, on détermine, par exemple, les valeurs courantes des paramètres de l'aéronef suivants :

- un temps synchronisé ;
- une vitesse air de l'aéronef ;
- une distance sol de l'aéronef par rapport à un point donné, de préférence le seuil de piste ;
- l'altitude de l'aéronef ;
- la position des becs et des volets de l'aéronef ;
- la position du train d'atterrissage ;
- une position des aérofreins ;
- un niveau de poussée moteur.

De préférence, on déclenche une alarme sonore et/ou visuelle lorsque la différence entre l'altitude de stabilisation prédite et l'altitude de stabilisation de consigne est, en valeur absolue, supérieure audit seuil d'altitude.
En outre, on peut afficher, dans le cockpit de l'avion, la trajectoire verticale optimisée établie lors de l'étape D/.
Par ailleurs, dans une mise en oeuvre préférée du procédé de l'invention, la transmission de la trajectoire verticale optimisée, lors de l'étape E/, aux moyens de guidage de l'avion est déclenchée par une action volontaire des pilotes.
De plus, lesdits modèles prédéterminés peuvent comprendre au moins certains des éléments suivants :

- un modèle de vent ;
- un modèle de finesse ;
- une indication de la dynamique des actionneurs ;
- une indication de contraintes opérationnelles.

La présente invention concerne, de plus, un dispositif de gestion optimisée de la trajectoire verticale d'un aéronef, lors d'un vol le long d'une trajectoire d'approche prédéterminée à laquelle est associée une trajectoire verticale théorique, de manière à assurer une approche finale stabilisée, définie par une vitesse d'approche de consigne et une altitude de stabilisation de consigne sur ladite trajectoire d'approche prédéterminée.
Selon l'invention, ledit dispositif comporte :

- des moyens pour déterminer les valeurs courantes de paramètres de l'aéronef ;
- des moyens pour prédire, par calcul, l'altitude de stabilisation à laquelle l'aéronef va atteindre ladite vitesse d'approche, en fonction des valeurs courantes déterminées d'au moins certains des paramètres de l'aéronef, de la trajectoire verticale théorique et de modèles prédéterminés ;
- des moyens pour comparer l'altitude de stabilisation prédite à l'altitude de stabilisation de consigne ; et
- des moyens pour établir une trajectoire verticale optimisée en fonction des valeurs courantes déterminées d'au moins certains desdits paramètres de l'aéronef, des valeurs de paramètres auxiliaires comprenant un point d'interception de l'axe d'approche finale (Ax) et un point de cassure de la trajectoire verticale optimisée (TO) déterminée lors d'une itération précédente et de la différence entre l'altitude de stabilisation prédite et l'altitude de stabilisation de consigne déterminée par les moyens de comparaison, lorsque cette différence déterminée est, en valeur absolue, supérieure à un seuil d'altitude prédéfini.

En outre, le dispositif peut comporter des moyens pour émettre une alarme sonore et/ou visuelle dans le cockpit de l'avion, lorsque la différence entre l'altitude de stabilisation prédite et l'altitude de stabilisation de consigne, déterminée par les moyens de comparaison, est, en valeur absolue, supérieure audit seuil d'altitude.

De plus, ledit dispositif peut comporter des moyens d'affichage pour présenter aux pilotes, sur un écran de visualisation, des informations relatives à la trajectoire verticale optimisée établie.

La présente invention concerne également un avion qui comporte un dispositif du type de celui décrit ci-dessus.

Les figures du dessin annexé feront bien comprendre comment l'invention peut être réalisée. Sur ces figures, des références identiques désignent des éléments semblables.

La figure 1 est le schéma synoptique d'un dispositif de gestion optimisée de l'énergie d'un avion, conforme à l'invention.

La figure 2 est un représentation schématique des moyens de prédiction du dispositif de la figure 1.

La figure 3 illustre des exemples de trajectoires verticales optimisées établies par le dispositif de la figure 1.

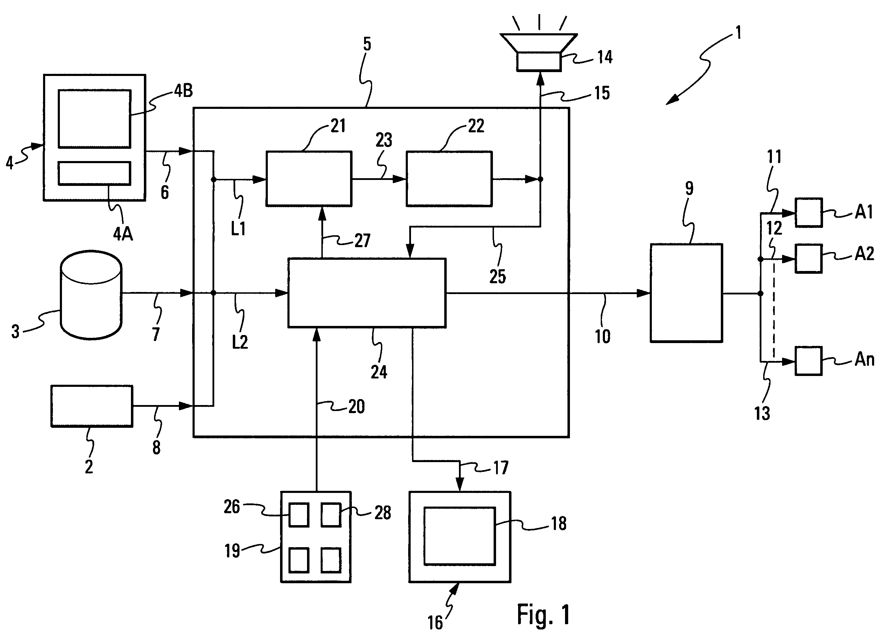

Sur la figure 1, on a représenté un dispositif 1, conforme à l'invention, pour la gestion optimisée de l'énergie d'un avion (non représenté sur cette figure), lors d'un vol le long d'une trajectoire d'approche prédéterminée à laquelle est associée une trajectoire verticale théorique, de manière à assurer une approche finale stabilisée.

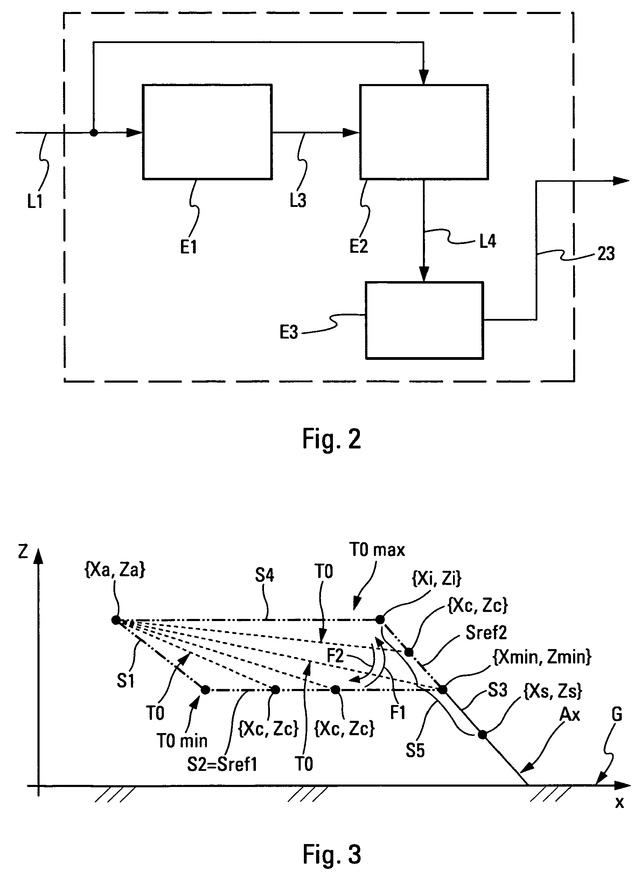

Tel que rappelé ci-dessus et comme le montre la figure 2, la trajectoire d'approche s'achève par l'approche finale stabilisée, au cours de laquelle, l'avion - qui est en configuration d'atterrissage - suit l'axe d'approche final Ax de pente par rapport au sol G prédéfinie, à partir d'une altitude de stabilisation de consigne Zs, avec une vitesse d'approche de consigne, un réglage du régime des moteurs et une assiette stabilisés et prédéfinis.

On entend, dans la présente description, par « trajectoire verticale », la trajectoire de l'avion qui est définie par des points de passage à différentes altitudes Z en fonction de la distance sol X.

Comme le montre la figure 1, le dispositif 1 de l'invention comporte :

- un ensemble 2 de sources d'informations usuelles précisées ci-dessous, qui permet de déterminer les valeurs courantes de paramètres de vol de l'avion ;
- au moins une base de données 3 qui comprend des modèles précisés ci-dessous ;
- des moyens d'interface 4, en particulier un clavier 4A associé à un écran d'affichage 4B ou tout autre moyen usuel, permettant aux pilotes d'entrer des données dans le dispositif 1, par exemple des objectifs de guidage (position, vitesse et configurations finales désirées et cibles) ;
- une unité de traitement d'informations 5 qui est reliée, par l'intermédiaire de liaisons 6 à 8, respectivement à l'ensemble 2, à la base de données 3 et aux moyens d'interface 4 et qui est formée de manière :

  - à prédire un état de sur-énergie ou de sous-énergie de l'avion ; et
  - à établir une trajectoire verticale optimisée TO, en cas de détection d'un tel état de sur-énergie ou de sous-énergie ;

- des moyens de guidage 9 de l'avion, qui mettent en oeuvre des lois de guidage de trajectoire verticale et des lois de guidage de trajectoire latérale, pour maintenir l'avion respectivement sur une trajectoire verticale et une trajectoire latérale planifiées. Les moyens de guidage 9 sont reliés, par la liaison 10, à l'unité de traitement 5, afin de pouvoir recevoir une trajectoire verticale optimisée TO établie par l'unité de traitement 5. A partir de la trajectoire verticale optimisée TO reçue, les moyens de guidage 9 sont aptes à élaborer des ordres de commande à destination d'actionneurs usuels A1, A2, ... , An de l'avion, par l'intermédiaire des liaisons 11, 12, ..., 13, pour actionner des éléments associés (moteurs, becs, volets, train d'atterrissage, ...) et ainsi assurer la trajectoire verticale optimisée TO établie ;
- des moyens 14 pour émettre une alarme sonore et/ou visuelle dans le cockpit de l'avion, qui sont reliés à l'unité de traitement 5, par l'intermédiaire de la liaison 15. Lorsqu'un état de sur-énergie ou de sous-énergie a été détecté par l'unité de traitement 5, les moyens 14 sont aptes à déclencher une alarme afin de prévenir les pilotes de cet état ;
- des moyens d'affichage 16 qui sont reliés, par une liaison 17, à l'unité de traitement 5 et qui sont formés de manière à présenter aux pilotes de l'avion, sur un écran de visualisation 18 du cockpit, des informations relatives à la mise en oeuvre de l'invention et, notamment, des informations relatives à la trajectoire verticale optimisée TO établie par l'unité de traitement 5 pour permettre aux pilotes de prendre connaissance des caractéristiques de celle-ci ; et

- des moyens d'entrée de données 19, reliés à l'unité de traitement 5 par la liaison 20, par lesquels les pilotes sont aptes à transmettre directement des informations et/ou des ordres de commande à l'unité de traitement 5, comme cela est détaillé ci-après.

Dans le cadre de la présente invention, ledit ensemble 2 de sources d'informations peut, par exemple, comporter :

- un calculateur de données air de type ADC ("Air Data Computer" en anglais) ;
- au moins un système de référence inertielle de type IRS ("Inertial Reference System" en anglais) ; et
- un système de gestion de vol de type FMS ("Flight Management System" en anglais). On notera que les moyens de guidage 9 de l'avion peuvent être intégrés au FMS.

Ainsi, les moyens 2 sont aptes à transmettre, par la liaison 8, à l'unité de traitement 5 :

- les valeurs courantes des paramètres suivants :

   ▪ le temps (qui est synchronisé avec le dispositif 1) ;
   ▪ la vitesse air de l'avion ;
   ▪ la distance sol X de l'avion par rapport à un point donné, de préférence le seuil de piste ;
   ▪ l'altitude de l'avion ;
   ▪ la position des becs et volets (c'est-à-dire la configuration aérodynamique de l'avion) ;
   ▪ la position du train d'atterrissage ;
   ▪ une position d'aérofreins ;
   ▪ un niveau de poussée moteur.

- la trajectoire latérale, définie par des points de passage, qui est associée à la trajectoire d'approche prédéterminée ; et
- la trajectoire verticale théorique associée à la trajectoire d'approche prédéterminée.

Comme indiqué précédemment, l'unité de traitement 5 peut également recevoir, par la liaison 6, des objectifs de guidage.

En outre, la base de données 3 peut fournir, par la liaison 7, différentes informations à l'unité de traitement 5, dont notamment :

- un modèle du vent. Afin de rendre la prédiction précise, on utilise une information du vent probable tout au long de la trajectoire. Pour cela, il est possible d'utiliser le même modèle de vent que le système FMS de gestion du vol de l'avion ;
- une dynamique des actionneurs. Afin de rendre la prédiction précise, on utilise des dynamiques des différents actionneurs (notamment le temps d'extension des becs et volets et du train d'atterrissage) ;

- des contraintes en vitesse. Pour s'assurer que le dispositif 1 puisse prendre en compte les contraintes opérationnelles, les vitesses minimales et maximales opérationnelles sont fournies ; et
- des modèles de finesse. Afin de rendre la prédiction possible, on utilise différents modèles de finesse de l'avion, de préférence un modèle pour chaque configuration aérodynamique avec ou sans train d'atterrissage sorti.

Par ailleurs, comme le montre la figure 1, l'unité de traitement 5 comporte :

- des moyens 21 pour prédire, par calcul, l'altitude de stabilisation à laquelle l'avion va atteindre la vitesse d'approche de consigne à partir d'informations (notamment les valeurs courantes de paramètres, la trajectoire verticale théorique et de modèles prédéterminés) reçues via une liaison L1 (regroupant les liaisons 6, 7 et 8 précitées). Pour cela, les moyens 21 réalisent des calculs progressifs, pour une pluralité de segments successifs le long de la trajectoire de l'avion jusqu'au point de stabilisation. Chaque segment correspond à une phase à configuration aérodynamique constante avec ou sans train d'atterrissage sorti ou à une phase de transition de configurations aérodynamiques ou de sortie de train d'atterrissage, des paramètres prédits à la fin d'un segment quelconque étant utilisés comme paramètres initiaux pour le segment qui suit directement. Ainsi, la prédiction mise en oeuvre par les moyens de prédiction 21 se fait par propagation de calculs d'un segment à l'autre. Deux distinctions sont donc à prendre en compte :

   ▪ le cas d'un segment à configuration aérodynamique constante ; et
   ▪ le cas d'un segment lors d'une transition de configurations aérodynamiques.

Étant donné que lors de la phase d'approche, les pilotes doivent commander les différentes configurations aérodynamiques becs et volets et la position du train d'atterrissage, on prend comme hypothèse au sein de la prédiction que ces différentes configurations et position sont sorties selon la procédure standard (c'est-à-dire par rapport à des vitesses caractéristiques standard). Toutefois, on pourrait envisager que ces vitesses caractéristiques soient différentes des vitesses caractéristiques standard ;

- des moyens 22 pour comparer l'altitude de stabilisation prédite - reçue des moyens de prédiction 21 par la liaison 23 - à l'altitude de stabilisation de consigne Zs. Les moyens de comparaison 22 sont aptes à calculer la différence entre l'altitude de stabilisation prédite et l'altitude de stabilisation de consigne Zs et à comparer la valeur absolue de la différence à un seuil d'altitude prédéterminé. Les trois cas suivants peuvent alors se présenter :

■ la différence calculée est inférieure au seuil d'altitude, l'avion est dans une situation nominale en énergie ;
■ la différence calculée est négative et est, en valeur absolue, supérieure audit seuil d'altitude, l'avion est dans un état de sur-énergie ;
■ la différence calculée est positive et est supérieure audit seuil d'altitude, l'avion est dans un état de sous-énergie.

Dans le cas d'une détection d'un état de sur-énergie ou d'un état de sous-énergie par les moyens 22, un signal comportant des informations relatives à la détection peut être émis par les moyens 22 et reçu par les moyens d'émission 14 (liaison 15) qui, en réponse, déclenchent l'émission d'une alarme pour avertir les pilotes de cet état d'énergie ; et

- des moyens 24 pour établir une trajectoire verticale optimisée TO, qui sont reliés, par l'intermédiaire des liaisons L2 (regroupant les liaisons 6, 7 et 8 précitées), 20 et 25, respectivement aux moyens 2, 3 et 4, aux moyens d'entrée de données 19 et aux moyens de comparaison 22.

Comme le montre la figure 2, les moyens de prédiction 21 de l'altitude de stabilisation comportent :

- un élément E1 qui réalise une prédiction :

■ soit - dans le cas d'un segment à configuration aérodynamique constante - de l'instant final auquel l'avion va atteindre une vitesse air finale, à partir de la vitesse air initiale, de la vitesse air finale et du temps initial reçus par la liaison L1 ;
■ soit - dans le cas d'un segment lors d'une transition de configurations aérodynamiques de l'avion - de la vitesse air finale sur ledit segment, puisque le temps du segment est connu (temps d'extension de la configuration), à partir la vitesse air initiale et de l'écart de temps dudit segment reçus par la liaison L1.
L'élément E1 est donc capable de délivrer en sortie, par la liaison L3, une prédiction de l'instant final ou de la vitesse air finale sur le segment considéré ;

- un élément E2 qui réalise une prédiction de la distance sol en fin du segment considéré, à l'aide des vitesses air initiale et finale, de l'écart de temps entre l'instant final et initial du segment considéré, ainsi que de la distance sol initiale du segment considéré (reçues via les liaisons L1 et L3). L'élément E2 est apte à délivrer en sortie, par la liaison L4, la distance sol finale associée au segment considéré ; et

- un élément E3 qui réalise une prédiction d'altitude finale sur le segment considéré, à partir de ladite distance sol finale (reçue par la liaison L4), en tenant compte d'une table. Cette table représente la trajectoire verticale planifiée à être volée. Les trajectoires planifiées sont souvent simples et peuvent être définies par une succession de segments. Il est alors possible de représenter ces trajectoires par des points de passage (ou points d'interpolation) provenant de ladite table. L'interpolation de tous ces points permet de représenter l'allure globale de la trajectoire. Il est alors possible, partant d'un point dans le repère sol (distance sol finale prédite) de calculer l'altitude finale associée audit point dans le repère sol. Cette table peut évoluer dans le cas où la trajectoire verticale est amenée à être modifiée.

Comme le montre la figure 3, pour être en accord avec le contrôle aérien, chaque trajectoire verticale optimisée TO établie par les moyens 24 est comprise entre les deux trajectoires verticales extrêmes TOmin et TOmax suivantes :

- une trajectoire verticale optimisée minimale TOmin qui comporte :

■ un segment en pente S1, qui s'étend depuis le point courant {Xa,Za} de l'avion sur la trajectoire d'approche jusqu'à l'altitude minimale d'interception Zmin de l'axe d'approche finale Ax. Zmin peut être configurée par le pilote par l'intermédiaire des moyens d'interface 4 ;
■ un segment en palier S2, qui s'étend le long de ladite altitude minimale d'interception Zmin jusqu'au point d'interception minimale {Xmin, Zmin}; et
■ un segment en pente S3 sur l'axe d'approche finale Ax, qui s'étend depuis le point d'interception minimale {Xmin,Zmin} jusqu'au point de stabilisation {Xs,Zs}, Zs étant l'altitude de stabilisation de consigne,

- une trajectoire verticale optimisée maximale TOmax qui comporte :

■ un segment en palier S4, qui s'étend depuis le point courant {Xa,Za} de l'avion, à l'altitude constante Za, jusqu'à un point d'interception {Xi, Zi} de l'axe d'approche finale Ax ; et
■ un segment en pente S5 sur l'axe d'approche finale Ax, qui s'étend depuis le point d'interception {Xi,Zi} jusqu'au point de stabilisation {Xs, Zs}.

En variante, la trajectoire verticale optimisée minimale pourrait être définie par une pente maximale de descente, ou une vitesse verticale maximale de descente, et la trajectoire verticale optimisée maximale pourrait être définie par une pente minimale de descente, ou une vitesse verticale minimale de descente.

La logique des moyens 24 pour établir une trajectoire verticale optimisée TO repose sur les considérations suivantes :

- dans le cas d'un état de sur-énergie détecté, les moyens 24 vont construire des trajectoires verticales optimisées TO qui favorisent les paliers en partant de la position courante {Xa,Za} de l'avion. En effet, la finesse de l'avion peut être traduite comme une capacité en termes de pente totale. La pente totale $\gamma_T^{A/C}$ est définie par deux paramètres, à savoir l'accélération $\dot{V}$ de l'avion sur la trajectoire ($V$ étant la vitesse de l'avion) et la pente $\gamma$ de la trajectoire, comme l'illustre l'équation suivante :

$$\gamma_T^{A/C} = \frac{\dot{V}}{g} + \gamma$$

dans laquelle g est l'accélération gravitationnelle terrestre. Ainsi, dans le cas où l'avion vole à altitude constante (c'est-à-dire qu'il est sur un palier), la pente est nulle ($\gamma = 0$), de sorte que toute la finesse avion est utilisée dans le terme d'accélération. Étant donné que la pente totale est négative en phase d'approche (les moteurs sont au régime de ralenti), l'avion va décélérer au maximum de ses capacités. En décélérant rapidement, l'avion va faire chuter sa vitesse rapidement, ce qui permet dans un premier temps de dissiper de l'énergie. En outre, comme l'avion atteint des basses vitesses rapidement (et donc les vitesses caractéristiques de changement de configuration), les différentes configurations des becs, des volets et du train d'atterrissage vont pouvoir être commandées plus tôt, de manière à dégrader davantage la finesse avion. Ainsi, ces deux effets dus à la modification de la trajectoire verticale vont permettre à l'avion de rétablir une situation en énergie propice à la stabilisation ; et

- dans le cas d'un état de sous-énergie détecté, les moyens 24 vont construire des trajectoires verticales optimisées TO qui favorisent les pentes en partant de la position courante {Xa,Za} de l'avion. En effet, plus la pente est raide et plus le terme d'accélération est petit et donc moins l'avion décélère. Dans un premier cas extrême pour lequel la pente de la trajectoire est égale à la pente totale, l'avion vole à vitesse constante. Dans un second cas extrême pour lequel la pente est inférieure (négative) à la pente totale (également négative), le terme d'accélération devient alors positif et la vitesse de l'avion augmente. Ainsi, dans le cas de sous-énergie, la modification de la trajectoire verticale, en favorisant, les pentes va permettre à l'avion de moins décélérer et donc de limiter la dégradation de sa finesse. Ces deux effets dus à la modification de la trajectoire verticale vont permettre à l'avion de rétablir une situation en énergie propice à la stabilisation. Autrement dit, en évitant de décélérer trop tôt grâce à la pente, on évite de changer de configurations des becs, des volets et du train d'atterrissage trop tôt, ce qui permet d'éviter d'atteindre de fortes pentes totales trop rapidement et donc de décélérer trop tôt. Cela permet de minimiser la perte d'énergie en cas de situation de sous-énergie.

Dans une réalisation préférée de l'invention, les moyens 24 sont activables par les pilotes, par exemple, par une action volontaire sur un bouton d'activation/désactivation 26 appartenant aux moyens d'entrée de données 19. Sans activation des moyens 24 par les pilotes, aucune trajectoire verticale optimisée TO n'est établie. Bien entendu, en variante, une telle activation/désactivation pourrait être optionnelle.

Lorsqu'ils reçoivent (liaison 25) le signal comportant des informations relatives à la détection d'un état de sur-énergie ou de sous-énergie délivré par les moyens de comparaison 22, les moyens 24 - après avoir été préalablement activés par les pilotes - sont aptes à établir une trajectoire verticale optimisée TO à partir d'informations provenant des moyens 2, 3 et 4 et 22. Ils transmettent ensuite aux moyens de prédiction 21 (liaison 27) des informations relatives à la trajectoire verticale optimisée TO établie.

Lorsque les moyens de prédiction 21 reçoivent des informations relatives à la trajectoire verticale optimisée TO, ils calculent l'altitude de stabilisation - qui est associée à cette la trajectoire verticale optimisée TO - à laquelle l'avion va atteindre la vitesse d'approche de consigne.

L'altitude de stabilisation ainsi prédite est alors transmise aux moyens de comparaison 22 (liaison 23) qui la comparent à l'altitude de stabilisation de consigne Zs.

Lorsque la différence entre l'altitude de stabilisation prédite et l'altitude de stabilisation de consigne Zs est, en valeur absolue, inférieure au seuil d'altitude, les informations relatives à la trajectoire verticale optimisée TO établie sont envoyées aux moyens d'affichage 16, par la liaison 17, qui peuvent afficher la trajectoire verticale optimisée TO établie pour validation. Les pilotes peuvent alors :

- soit valider la trajectoire verticale optimisée TO affichée sur les moyens 16, en actionnant un bouton de validation 28 des moyens d'entrée de données 19. Dans ce cas, la trajectoire verticale optimisée TO établie est transmise, par la liaison 10, aux moyens de guidage 9 ;
- soit refuser la trajectoire verticale optimisée TO affichée sur les moyens 16. Un tel refus est par exemple obtenu par une absence d'action sur les moyens d'entrée de données 19. La trajectoire verticale optimisée TO n'est, dans ce dernier cas, pas transmise aux moyens de guidage 9.

Lorsque la différence entre l'altitude de stabilisation prédite et l'altitude de stabilisation de consigne Zs est, en valeur absolue, supérieure au seuil d'altitude, une nouvelle trajectoire optimisée TO est établie par les moyens 24. Des informations relatives à cette nouvelle trajectoire verticale optimisée TO établie sont alors transmises aux moyens de prédiction 21 qui, de nouveau, calculent l'altitude de stabilisation associée, à laquelle l'avion va atteindre la vitesse d'approche de consigne. L'altitude de stabilisation ainsi prédite est ensuite transmise aux moyens de comparaison 22 (liaison 23) qui la comparent à l'altitude de stabilisation de consigne Zs.

Lorsque la différence entre l'altitude de stabilisation prédite et l'altitude de stabilisation de consigne Zs est, en valeur absolue, inférieure au seuil d'altitude, les informations relatives à la trajectoire verticale optimisée établie sont envoyées aux moyens d'affichage 16, par la liaison 17, qui peuvent afficher la trajectoire verticale optimisée TO établie pour validation.

Lorsque la différence entre l'altitude de stabilisation prédite et l'altitude de stabilisation de consigne Zs est, en valeur absolue, supérieure au seuil d'altitude, on itère successivement les opérations précédentes d'établissement d'une trajectoire verticale optimisée TO, de prédiction et de comparaison tant que la différence entre l'altitude de stabilisation prédite associée et l'altitude de stabilisation de consigne Zs reste, en valeur absolue, supérieure audit seuil d'altitude.

La détermination d'une trajectoire verticale optimisée TO par les moyens 24 peut se faire de la manière détaillée ci-après.

La trajectoire verticale optimisée TO, partant du point courant {Xa,Za} de l'avion, rejoint l'axe d'approche finale Ax au point d'interception {Xmin,Zmin}, Zmin étant l'altitude minimale d'interception.

De plus, la trajectoire verticale optimisée TO comporte deux segments, à savoir :

- un premier segment qui s'étend de la position courante de l'avion {Xa,Za} jusqu'à un point de cassure {Xc,Zc} ; et
- un second segment qui s'étend du point de cassure {Xc,Zc} jusqu'au point d'interception {Xmin,Zmin} de l'axe d'approche finale Ax.

Le point de cassure définit donc la séparation entre les deux segments de d'une trajectoire verticale optimisée. La construction de cette dernière se fait donc essentiellement par ce point de cassure {Xc,Zc}.

Comme le montre la figure 3, le point de cassure {Xc,Zc} peut évoluer sur deux segments de référence Sref1 et Sref2 lors des itérations successives précitées :

- le premier segment de référence Sref1 est un segment en palier défini à l'altitude minimale d'interception Zmin. Il correspond au segment S2 de la trajectoire verticale optimisée minimale TOmin ; et
- le second segment de référence Sref2 est un segment en pente qui appartient à l'axe d'approche finale Ax et s'étend entre le point d'interception {Xi, Zi} et le point d'interception minimale d'interception {Xmin,Zmin}.

Lors des itérations successives, le point de cassure {Xc,Zc} est modifié par les moyens 24, afin d'établir des nouvelles trajectoires verticales optimisées. Deux cas distincts sont à prendre en considération :

- premier cas (cas de sous-énergie) : partant d'un point de cassure donné à l'itération précédente, notée k, lorsque la différence, déterminée par les moyens 22, entre l'altitude de stabilisation prédite et l'altitude de stabilisation de consigne Zs est négative et est, en valeur absolue, supérieure audit seuil d'altitude, l'avion est dans un état de sur-énergie, de sorte que les moyens 24 modifient les coordonnées du point de cassure lors de l'itération suivante, notée k + 1, selon la direction de la flèche F1 (figure 3). Dans ce premier cas, la modification des coordonnées du point de cassure {Xc,Zc} se fait d'abord par un incrément de distance sol X donné pour se rapprocher du point d'interception minimale {Xmin, Zmin}, lorsque ledit point de cassure est sur le segment en palier Sref1, puis par un incrément d'altitude donné, lorsque ledit point de cassure est sur le segment en pente Sref2 en remontant vers le point d'interception minimale {Xmin,Zmin}; et
- second cas (cas de sur-énergie) : partant d'un point de cassure donné à l'itération précédente k, lorsque la différence entre l'altitude de stabilisation prédite et l'altitude de stabilisation de consigne Zs est positive et supérieure audit seuil d'altitude, l'avion est dans un état de sous-énergie, de sorte que les moyens 24 modifient les coordonnées du point de cassure lors de l'itération suivante k + 1 selon la direction de la flèche F2 (figure 3). Dans ce second cas, la modification des coordonnées du point de cassure {Xc,Zc} se fait par un incrément d'altitude donné en descendant vers le point d'interception minimale {Xmin,Zmin}, lorsque ledit point est sur le segment en pente Sref2, puis par un incrément de distance sol donnée en s'éloignant du point d'interception minimale {Xmin,Zmin}, lorsque ledit point est sur le segment en palier Sref1.

Ainsi, de la mise en oeuvre d'itérations successives, on peut déduire les deux cas distincts suivants :

- premier cas : les moyens de prédiction prédisent une stabilisation de l'avion à l'altitude de stabilisation de consigne Zs, de sorte que les itérations s'arrêtent.

La dernière trajectoire verticale optimisée TO établie est celle dite optimale et est transmise, après validation par les pilotes, aux moyens de guidage 9 ;

- second cas : il n'est plus possible d'établir une nouvelle trajectoire verticale optimisée car la trajectoire verticale optimisée TO établie lors de la dernière itération se situe sur l'une des trajectoires verticales extrêmes TOmin ou TOmax. La trajectoire verticale optimisée TO transmise aux moyens de guidage 9, après validation par les pilotes, est alors celle pour laquelle l'écart entre l'altitude de stabilisation prédite associée et l'altitude de stabilisation de consigne Zs est minimisé.

Ainsi, la présente invention permet la prédiction de l'état d'énergie de l'avion en temps réel tout au long de la trajectoire d'approche planifiée et la proposition d'une nouvelle trajectoire verticale optimisée TO permettant un vol stabilisé en approche.

Autrement dit, grâce à l'invention, on réalise un ajustement de la trajectoire verticale de la phase d'approche, de manière à améliorer la gestion de l'énergie et permettre, ainsi, un rendez-vous en énergie en approche.

## Revendications

1. Procédé de gestion optimisée de la trajectoire verticale d'un aéronef, lors d'un vol le long d'une trajectoire d'approche prédéterminée à laquelle est associée une trajectoire verticale théorique, de manière à assurer une approche finale stabilisée, définie par une vitesse d'approche de consigne et une altitude de stabilisation de consigne (Zs) sur ladite trajectoire d'approche prédéterminée, **caractérisé en ce que**, au cours du vol de l'aéronef le long de ladite trajectoire d'approche prédéterminée, on effectue, de façon automatique, les étapes successives suivantes :

   A/ on détermine les valeurs courantes de paramètres de l'aéronef ;
   B/ on prédit, par calcul, l'altitude de stabilisation à laquelle l'aéronef va atteindre ladite vitesse d'approche, en fonction des valeurs courantes déterminées d'au moins certains des paramètres de l'aéronef, de la trajectoire verticale théorique et de modèles prédéterminés ;
   C/ on compare l'altitude de stabilisation prédite à l'altitude de stabilisation de consigne (Zs) ;
   D/lorsque la différence entre l'altitude de stabilisation prédite et l'altitude de stabilisation de consigne (Zs) est, en valeur absolue, supérieure à un seuil d'altitude prédéfini, on établit une trajectoire verticale optimisée (TO) en fonction des valeurs courantes déterminées d'au moins certains des paramètres de l'aéronef, des valeurs de paramètres auxiliaires comprenant un point d'interception de l'axe d'approche finale (Ax) et un point de cassure de la trajectoire verticale optimisée (TO) déterminée lors d'une itération précédente et de la différence entre l'altitude de stabilisation prédite et l'altitude de stabilisation de consigne (Zs) déterminée lors de l'étape C/ ; et
   E/ on transmet ladite trajectoire verticale optimisée (TO) à des moyens de guidage (9) embarqués à bord de l'aéronef.

2. Procédé selon la revendication 1, **caractérisé en ce que**, tant que la différence entre l'altitude de stabilisation prédite et l'altitude de stabilisation de consigne (Zs) est, en valeur absolue, supérieure audit seuil d'altitude, on itère les étapes A/, B/, C/ et D/, la trajectoire verticale théorique étant remplacée, lors de l'étape B/, par la trajectoire optimisée (TO) établie lors de l'itération précédente.

3. Procédé selon l'une des revendications 1 et 2, **caractérisé en ce que** la trajectoire verticale optimisée (TO) est comprise entre les deux trajectoires verticales extrêmes suivantes :

   - une trajectoire verticale optimisée minimale (TOmin) qui, de préférence, comporte :

     ■ un segment en pente (S1), qui s'étend depuis le point courant ({Xa,Za}) de l'avion sur la trajectoire d'approche jusqu'à une altitude minimale d'interception (Zmin) de l'axe d'approche finale (Ax) associé à la trajectoire d'approche ;
     ■ un segment en palier (S2), qui s'étend le long de ladite altitude minimale d'interception (Zmin) jusqu'à un point d'interception minimale ({Xmin,Zmin}) ; et
     ■ un segment en pente (S3) sur l'axe d'approche finale (Ax), qui s'étend depuis le point d'interception minimale ({Xmin,Zmin}) jusqu'à un point de stabilisation ({Xs,Zs}),

   - une trajectoire verticale optimisée maximale (TOmax) qui, de préférence, comporte :

     ■ un segment en palier (S4), qui s'étend depuis le point courant ({Xa,Za}) de l'avion, à l'altitude constante (Za), jusqu'à un point d'interception ({Xi,Zi}) de l'axe d'approche finale (Ax) ; et
     ■ un segment en pente (S5) sur l'axe d'approche finale (Ax), qui s'étend depuis ledit point d'interception ({Xi,Zi}) jusqu'au point de stabilisation ({Xs,Zs}).

4. Procédé selon la revendication 3,

**caractérisé en ce que**, lorsque la trajectoire verticale optimisée (TO), établie lors de la dernière itération de l'étape D/, appartient à une desdites trajectoires extrêmes (TOmin, TOmax), la trajectoire verticale optimisée (TO) transmise aux moyens de guidage (9), lors de l'étape E/, est la trajectoire verticale optimisée (TO) pour laquelle l'écart entre l'altitude de stabilisation prédite associée et l'altitude de stabilisation de consigne (Zs) est minimisé.

5. Procédé selon l'une des revendications 3 ou 4, **caractérisé en ce que**, lorsque la différence entre l'altitude de stabilisation prédite et l'altitude de stabilisation de consigne (Zs) est négative et, en valeur absolue, supérieure audit seuil d'altitude, l'aéronef est dans un état de sur-énergie et la trajectoire verticale optimisée (TO), établie lors de l'étape D/, tend vers la trajectoire verticale optimisée maximale (TOmax).

6. Procédé selon l'une des revendications 3 à 5. **caractérisé en ce que**, lorsque la différence entre l'altitude de stabilisation prédite et l'altitude de stabilisation de consigne (Zs) est positive et supérieure audit seuil d'altitude, l'aéronef est dans un état de sous-énergie et la trajectoire verticale optimisée (TO), établie lors de l'étape D/, tend vers la trajectoire verticale optimisée minimale (TOmin).

7. Procédé selon l'une des revendications précédentes, **caractérisé en ce que**, lors de l'étape A/, on détermine les valeurs courantes des paramètres de l'aéronef suivants :

   - un temps synchronisé ;
   - une vitesse air de l'aéronef ;
   - une distance sol (X) de l'aéronef par rapport à un point donné, de préférence le seuil de piste ;
   - l'altitude (Za) de l'aéronef ;
   - la position des becs et des volets de l'aéronef ;
   - la position du train d'atterrissage ;
   - une position des aérofreins ;
   - un niveau de poussée moteur.

8. Procédé selon l'une des revendications précédentes, **caractérisé en ce que** l'on déclenche une alarme sonore et/ou visuelle, lorsque la différence entre l'altitude de stabilisation prédite et l'altitude de stabilisation de consigne (Zs) est, en valeur absolue, supérieure audit seuil d'altitude.

9. Procédé selon l'une des revendications précédentes, **caractérisé en ce que** la transmission de la trajectoire verticale optimisée (TO), lors de l'étape E/, aux moyens de guidage (9) de l'aéronef est déclenchée par une action volontaire des pilotes.

10. Procédé selon l'une quelconque des revendications précédentes, **caractérisé en ce que** lesdits modèles prédéterminés comprennent au moins certains des éléments suivants :

    - un modèle de vent ;
    - un modèle de finesse ;
    - une indication de la dynamique d'actionneurs ;
    - une indication de contraintes opérationnelles.

11. Dispositif de gestion optimisée de la trajectoire verticale d'un aéronef, lors d'un vol le long d'une trajectoire d'approche prédéterminée à laquelle est associée une trajectoire verticale théorique, de manière à assurer une approche finale stabilisée, définie par une vitesse d'approche de consigne et une altitude de stabilisation de consigne (Zs) sur ladite trajectoire d'approche prédéterminée, **caractérisé en ce qu'**il comporte :

    - des moyens (2) pour déterminer les valeurs courantes de paramètres de l'aéronef ;
    - des moyens (21) pour prédire, par calcul, l'altitude de stabilisation à laquelle l'aéronef va atteindre ladite vitesse d'approche, en fonction des valeurs courantes déterminées d'au moins certains des paramètres de l'aéronef, de la trajectoire verticale théorique et de modèles prédéterminés ;
    - des moyens (22) pour comparer l'altitude de stabilisation prédite à l'altitude de stabilisation de consigne (Zs) ; et
    - des moyens (24) pour établir une trajectoire verticale optimisée (TO) en fonction des valeurs courantes déterminées d'au moins certains desdits paramètres de l'aéronef, des valeurs de paramètres auxiliaires comprenant un point d'interception de l'axe d'approche finale (Ax) et un point de cassure de la trajectoire verticale optimisée (TO) déterminée lors d'une itération précédente et de la différence entre l'altitude de stabilisation prédite et l'altitude de stabilisation de consigne (Zs) déterminée par les moyens de comparaison (22), lorsque cette différence déterminée est, en valeur absolue, supérieure à un seuil d'altitude prédéfini.

12. Dispositif selon la revendication 11, **caractérisé en ce qu'**il comporte des moyens (14) pour émettre une alarme sonore et/ou visuelle dans le cockpit de l'aéronef, lorsque la différence entre l'altitude de stabilisation prédite et l'altitude de stabilisation de consigne (Zs), déterminée par les moyens de comparaison (22), est, en valeur absolue, supérieure audit seuil d'altitude.

**13.** Dispositif selon l'une des revendications 11 ou 12, **caractérisé en ce qu'**il comporte des moyens d'affichage (16) pour présenter aux pilotes de l'aéronef, sur un écran de visualisation (18), des informations relatives à la trajectoire verticale optimisée (TO) établie.

**14.** Aéronef,
**caractérisé en ce qu'**il comporte un dispositif (1) tel que celui spécifié sous l'une des revendications 11 à 13.


**Patentansprüche**

**1.** Verfahren zur optimierten Führung der vertikalen Flugbahn eines Flugzeugs während eines Fluges entlang einer vorbestimmten Anflugbahn, der eine theoretische vertikale Flugbahn zugeordnet ist, um ein stabilisierten Endanflug sicherzustellen, der durch eine Sollanflugsgeschwindigkeit und eine Sollstabilisierungshöhe (Zs) auf der vorbestimmten Anflugbahn definiert ist,

> **dadurch gekennzeichnet, dass** während des Fluges des Flugzeugs entlang der vorbestimmten Anflugbahn die folgenden aufeinanderfolgenden Schritte automatisch durchgeführt werden:

>> A/ Bestimmen der aktuellen Werte von Parametern des Flugzeugs;
>> B/ Vorhersagen der Stabilisierungshöhe, in der das Flugzeug die Anfluggeschwindigkeit erreichen wird, durch Berechnung als Funktion von aktuellen Werten, die zumindest aus einigen Parametern des Flugzeugs bestimmt werden, der theoretischen, vertikalen Flugbahn und vorbestimmten Modellen;
>> C/ Vergleichen der vorhergesagten Stabilisierungshöhe mit der Sollstabilisierungshöhe (Zs);
>> D/ wenn der Absolutwert der Differenz zwischen der vorhergesagten Stabilisierungshöhe und der Sollstabilisierungshöhe (Zs) größer als ein vorbestimmter Höhenschwellwert ist, wird eine optimierte vertikale Flugbahn (TO) als Funktion von aktuellen Werten, die aus zumindest einigen Parametern des Flugzeugs bestimmt werden, den Werten der Hilfsparameter, die den Abfangpunkt der Achse des Endanflugs (Ax) und einen Bruchpunkt der optimierten vertikalen Flugbahn (TO) umfassen, die während der vorhergehenden Iteration bestimmt wird, und der Differenz zwischen der vorhergesagten Stabilisierungshöhe und der Sollstabilisierungshöhe (Zs), die in Schritt C/ bestimmt wird, ermittelt; und
E/ Übertragen der optimierten vertikalen Flugbahn (TO) zu Führungsmitteln (9), die sich an Bord des Flugzeugs befinden.

**2.** Verfahren nach Anspruch 1, **dadurch gekennzeichnet, dass**, solange der Absolutwert der Differenz zwischen der vorhergesagten Stabilisierungshöhe und der Sollstabilisierungshöhe (Zs) größer als der Höhenschwellwert ist, die Schritte A/, B/, C/ und D/ iteriert werden, wobei die theoretische vertikale Flugbahn im Schritt B/ durch die optimierte Flugbahn (TO) ersetzt wird, die während der vorhergehenden Iteration bestimmt wurde.

**3.** Verfahren nach einem der Ansprüche 1 und 2, **dadurch gekennzeichnet, dass** die optimierte vertikale Flugbahn (TO) zwischen den folgenden beiden extremen vertikalen Flugbahnen liegt:

> - einer minimalen optimierten vertikalen Flugbahn (TOmin), die vorzugsweise umfasst:

>> ■ ein schräges Segment (S1), das sich vom aktuellen Punkt ({Xa, Za}) des Flugzeugs auf der Anflugbahn bis zu einer minimalen Abfanghöhe (Zmin) der Achse des Endanflugs (Ax) erstreckt, die zu der Anflugbahn gehört;
>> ■ ein Plateausegment (S2), das sich entlang der minimalen Abfanghöhe (Zmin) bis zu einem minimalen Abfangpunkt ({Xmin, Zmin}) erstreckt; und
>> ■ ein schräges Segment (S3) auf der Achse des Endanflugs (Ax), das sich von dem minimalen Abfangpunkt ({Xmin, Zmin}) bis zu einem Stabilisierungspunkt ({Xs, Zs}) erstreckt;

> - eine maximale optimierte vertikale Flugbahn (TOmax), die vorzugsweise umfasst:

>> ■ ein Plateausegment (S4), das sich vom aktuellen Punkt ({Xa, Za}) des Flugzeugs auf der gleichen Höhe (Za) bis zu einem Abfangpunkt ({Xi, Zi}) der Achse des Endanflugs (Ax) erstreckt; und
>> ■ ein schräges Segment (S5) auf der Achse des Endanflugs (Ax), das sich von dem Abfangpunkt ({Xi, Zi}) bis zu dem Stabilisierungspunkt ({Xs, Zs}) erstreckt.

**4.** Verfahren nach Anspruch 3,

> **dadurch gekennzeichnet, dass**, wenn die optimierte vertikale Flugbahn (TO), die in der letzten Iteration des Schritts D/ bestimmt wurde, zu einer der äußeren Flugbahnen (TOmin, Tomax) gehört, die optimierte vertikale Flugbahn (TO), die an die Führungsmittel (9) im Schritt E/ übertragen wird, die optimierte vertikale Flugbahn (TO) ist, für welche die Differenz zwischen der vorhergesagten zugehörigen Stabilisierungshöhe und der Solistabilisierungshöhe (Zs) minimiert ist.

5. Verfahren nach einem der Ansprüche 3 oder 4,

   **dadurch gekennzeichnet, dass**, wenn die Differenz zwischen der vorhergesagten Stabilisierungshöhe und der Sollstabilisierungshöhe (Zs) negativ ist und ihr Absolutwert größer als der Höhenschwellwert ist, sich das Flugzeug in einem Zustand der Überenergie befindet, und die optimierte vertikale Flugbahn (TO), die in Schritt D/ bestimmt wurde, zu der maximalen optimierten vertikalen Flugbahn (Tomax) strebt.

6. Verfahren nach einem der Ansprüche 3 bis 5,

   **dadurch gekennzeichnet, dass**, wenn die Differenz zwischen der vorhergesagten Stabilisierungshöhe und der Sollstabilisierungshöhe (Zs) positiv und größer als der Höhenschwellwert ist, sich das Flugzeug in einem Zustand der Unterenergie befindet, und die optimierte vertikale Flugbahn (TO), die in Schritt D/ bestimmt wurde, zu der minimalen optimierten vertikalen Flugbahn (TOmin) strebt.

7. Verfahren nach einem der vorhergehenden Ansprüche,

   **dadurch gekennzeichnet, dass** in Schritt A/ die aktuellen Werte der folgenden Parameter des Flugzeugs ermittelt werden:

   - eine synchronisierte Zeit;
   - eine Luftgeschwindigkeit des Flugzeugs;
   - ein Bodenabstand (X) des Flugzeugs in Bezug auf einen vorgegebenen Punkt, vorzugsweise den Schwellwert der Piste;
   - die Höhe (Za) des Flugzeugs;
   - die Position der Spitzen und der Landeklappen des Flugzeugs;
   - die Position des Fahrwerks;
   - eine Position von Luftbremsen;
   - ein Niveau des Triebwerksschubs.

8. Verfahren nach einem der vorhergehenden Ansprüche,

   **dadurch gekennzeichnet, dass** ein akustischer und/ oder visueller Alarm ausgelöst wird, wenn der Absolutwert der Differenz zwischen der vorhergesagten Stabilisierungshöhe und der Sollstabilisierungshöhe (Zs) größer als der Höhenschwellwert ist.

9. Verfahren nach einem der vorhergehenden Ansprüche,

   **dadurch gekennzeichnet, dass** die Übertragung der optimierten vertikalen Flugbahn (TO) in Schritt E/ an die Führungsmittel (9) des Flugzeugs durch eine freiwillige Aktion des Piloten ausgelöst wird.

10. Verfahren nach einem der vorhergehenden Ansprüche, **dadurch gekennzeichnet, dass** die vorbestimmten Modelle zumindest einige der folgenden Elemente umfassen:

    - ein Windmodell;
    - ein Auflösungsmodell;
    - eine Angabe der Dynamik der Aktoren;
    - eine Angabe von betrieblichen Einschränkungen.

11. Vorrichtung zur optimierten Führung der vertikalen Flugbahn eines Flugzeugs während eines Fluges entlang einer vorbestimmten Anflugbahn, der eine theoretische vertikale Flugbahn zugeordnet ist, um einen stabilisierten Endanflug sicherzustellen, der durch eine Sollanflugsgeschwindigkeit und eine Sollstabilisierungshöhe (Zs) auf der vorbestimmten Anflugbahn definiert ist,

    **dadurch gekennzeichnet, dass** sie umfasst:

    - Mittel zum Bestimmen (2) der aktuellen Werte von Parametern des Flugzeugs;
    - Mittel zum Vorhersagen (21) der Stabilisierungshöhe, in der das Flugzeug die Anfluggeschwindigkeit erreichen wird, durch Berechnung als Funktion von aktuellen Werten, die zumindest aus einigen Parametern des Flugzeugs bestimmt werden, der theoretischen vertikalen Flugbahn und vorbestimmten Modellen;
    - Mittel zum Vergleichen (22) der vorhergesagten Stabilisierungshöhe mit der Sollstabilisierungshöhe (Zs); und
    - Mittel zum Ermitteln (24) einer optimierten vertikalen Flugbahn (TO) als Funktion von aktuellen Werten, die aus zumindest einigen Parametern des Flugzeugs bestimmt werden, den Werten der Hilfsparameter, die den Abfangpunkt der Achse des Endanflugs (Ax) und einen Bruchpunkt der optimierten vertikalen Flugbahn (TO) umfassen, die während der vorhergehenden Iteration bestimmt wird, und der Differenz zwischen der vorhergesagten Stabilisierungshöhe und der Sollstabilisierungshöhe (Zs), die durch die Mittel zum Vergleichen (22) bestimmt wird, wenn der Absolutwert dieser bestimmten Differenz größer als der vordefinierte Höhenschwellwert ist.

12. Vorrichtung nach Anspruch 11,

**dadurch gekennzeichnet, dass** sie Mittel (14) umfasst, um einen akustischen und/ oder visuellen Alarm im Cockpit des Flugzeugs auszugeben, wenn der Absolutwert dieser Differenz zwischen der vorhergesagten Stabilisierungshöhe und der Sollstabilisierungshöhe (Zs), die durch die Vergleichsmittel bestimmt (22) wird, größer als der Höhenschwellwert ist.

13. Vorrichtung nach einem der Ansprüche 11 oder 12,

**dadurch gekennzeichnet, dass** sie Anzeigemittel (16) aufweist, um den Piloten des Flugzeugs auf einem Anzeigeschirm (18) Informationen in Bezug auf die ermittelte optimierte vertikale Flugbahn (TO) anzuzeigen.

14. Flugzeug,

**dadurch gekennzeichnet, dass** es eine Vorrichtung (1) wie diejenige aufweist, die in einem der Ansprüche 11 bis 13 angegeben ist.

**Claims**

1. An optimized management method for the vertical trajectory of an aircraft upon a flight along a predetermined approach trajectory with which a theoretical vertical trajectory is associated so as to provide a stabilized final approach defined by a setpoint approach speed and a setpoint stabilization altitude (Zs) on said predetermined approach trajectory, **characterized in that**, during a flight of the aircraft along said predetermined approach trajectory, the following successive steps are carried out automatically, consisting in:

A/ determining the current values of parameters of the aircraft;
B/ predicting by calculation the stabilization altitude at which the aircraft will reach said approach speed as a function of the determined current values of at least some of the parameters of the aircraft, the theoretical vertical trajectory and predetermined models;
C/ comparing the predicted stabilization altitude to the setpoint stabilization altitude (Zs);

D/ when the difference between the predicted stabilization altitude and the setpoint stabilization altitude (Zs) is in an absolute value higher than a predefined altitude threshold, providing an optimized vertical trajectory (TO) as a function of the determined current values of at least some of the parameters of the aircraft, of the auxiliary parameter values including an interception point of the final approach axis (Ax) and a breaking point of the optimized vertical trajectory (TO) being determined upon a preceding iteration and of the difference between the predicted stabilization altitude and the setpoint stabilization altitude (Zs) determined upon step C/; and
E/ transmitting said optimized vertical trajectory (TO) to guiding means (9) embedded aboard the aircraft.

2. The method according to claim 1,
**characterized in that**, as long as the difference between the predicted stabilization altitude and the setpoint stabilization altitude (Zs) is in an absolute value higher than said altitude threshold, the steps A/, B/, C/ and D/ are iterated, the theoretical vertical trajectory being replaced upon the step B/ by the optimized trajectory (TO) being established upon the preceding iteration.

3. The method according to one of claims 1 and 2,
**characterized in that** the optimized vertical trajectory (TO) is comprised between the two following extreme vertical trajectories:

- a minimum optimized vertical trajectory (Tomin) that, preferably, comprises:

  • a slope segment (S1) extending from the current point {Xa,Za} of the airplane on the approach trajectory up to a minimum interception altitude (Zmin) of the final approach axis (Ax) associated with the approach trajectory;
  • a level segment (S2) extending along said minimum interception altitude (Zmin) up to a minimum interception point {Xmin,Zmin}; and
  • a slope segment (S3) on the final approach axis (Ax) extending from the minimum interception point ({Xmin,Zmin}) up to a stabilization point ({Xs,Zs}),

- a maximum optimized vertical trajectory (TOmax) that comprises preferably:

  • a level segment (S4) extending from the current point ({Xa,Za}) of the airplane, at constant altitude (Za) up to an interception point ({Xi,Zi}) of the final approach axis (Ax); and

• a slope segment (S5) on the final approach axis (Ax) extending from said interception point ({Xi,Zi}) up to the stabilization point ({Xs,Zs}).

4. The method according to claim 3, **characterized in that**, when the optimized vertical trajectory (TO), being established upon the last iteration of step D/, belongs to one of said extreme trajectories (TOmin, TOmax), the optimized vertical trajectory (TO) transmitted to the guiding means (9) upon step E/ is the optimized vertical trajectory (TO) for which the deviation between the associated predicted stabilization altitude and the setpoint stabilization altitude (Zs) is minimized.

5. The method according to one of claims 3 or 4, **characterized in that**, when the difference between the predicted stabilization altitude and the setpoint stabilization altitude (Zs) is negative and, in an absolute value, higher than said altitude threshold, the aircraft is in an over-energy state and the optimized vertical trajectory (TO) established upon step D/ tends toward the maximum optimized vertical trajectory (TOmax).

6. The method according to one of claims 3 to 5, **characterized in that**, when the difference between the predicted stabilization altitude and the setpoint stabilization altitude (Zs) is positive and higher than said altitude threshold, the aircraft is in an under-energy state and the optimized vertical trajectory (TO) established upon step D/ tends toward the minimum optimized vertical trajectory (TOmin).

7. The method according to one of the preceding claims, **characterized in that**, upon step A/, the current values of the following parameters of the aircraft are determined:

   - a synchronized time;
   - an air speed of the aircraft;
   - a ground distance (X) of the aircraft relative to a given point, preferably the runway threshold;
   - the altitude (Za) of the aircraft;
   - the position of the slats and flaps of the aircraft;
   - the position of the landing gear;
   - a position of the airbrakes;
   - a level of the motive thrust.

8. The method according to one of the preceding claims, **characterized in that** a sound and/or visual alarm is triggered when the difference between the predicted stabilization altitude and the setpoint stabilization altitude (Zs) is in an absolute value higher than said altitude threshold.

9. The method according to one of the preceding claims, **characterized in that** the transmission of the optimized vertical trajectory (TO), upon step E/, to the guiding means (9) of the aircraft is triggered by a voluntary action of the pilots.

10. The method according to any one of the preceding claims, **characterized in that** said predetermined models comprise at least some of the following elements:

    - a wind model;
    - a fineness model;
    - an indication of the dynamics of the actuators;
    - an indication of operational constraints.

11. An optimized management device for the vertical trajectory of an aircraft, upon a flight along a predetermined approach trajectory with which a theoretical vertical trajectory is associated so as to provide a stabilized final approach defined by a setpoint approach speed and a setpoint stabilization altitude (Zs) on said predetermined approach trajectory, **characterized in that** it comprises:

    - means (2) for determining the current values of parameters of the aircraft;
    - means (21) for predicting by calculation the stabilization altitude at which the aircraft will reach said approach speed as a function of the determined current values of at least some of the parameters of the aircraft, the theoretical vertical trajectory, and predetermined models;
    - means (22) to compare the predicted stabilization altitude to the setpoint stabilization altitude (Zs); and
    - means (24) to establish an optimized vertical trajectory (TO) as a function of the determined current values of at least some of said parameters of the aircraft, the auxiliary parameter values including an interception point of the final approach axis (Ax) and a breaking point of the optimized vertical trajectory (TO) being determined upon a preceding iteration and the difference between the predicted stabilization altitude and the setpoint stabilization altitude (Zs) being determined by the comparison means (22), when said determined difference is in an absolute value higher than a predefined altitude threshold.

12. The device according to claim 11, **characterized in that** it comprises means (14) for emitting a sound and/or visual alarm in the cockpit of the aircraft when the difference between the predicted stabilization altitude and the setpoint stabilization altitude (Zs), determined by the comparison means (22), is in an absolute value higher than said altitude threshold.

13. The device according to one of claims 11 or 12, **characterized in that** it comprises display means (16) to present the pilots, on a viewing screen (18), information relative to the optimized vertical trajectory (TO) being established.

14. An aircraft, **characterized in that** it comprises a device (1) such as specified in one of claims 11 to 13.

Fig. 1

EP 2 551 836 B1

Fig. 2

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2011137495 A1, SACLE JEROME [FR]